Europäisches Patentamt

European Patent Office

Office européen des brevets

(19)

(11) Veröffentlichungsnummer: **0 319 978**
**A2**

(12) **EUROPÄISCHE PATENTANMELDUNG**

(21) Anmeldenummer: 88120540.5

(22) Anmeldetag: 08.12.88

(51) Int. Cl.4: **C08G 77/16**

(30) Priorität: **11.12.87 DE 3742068**

(43) Veröffentlichungstag der Anmeldung:
**14.06.89 Patentblatt 89/24**

(84) Benannte Vertragsstaaten:
**BE DE ES FR GB IT NL**

(71) Anmelder: **WACKER-CHEMIE GMBH**
**Prinzregentenstrasse 22**
**D-8000 München 22(DE)**

(72) Erfinder: **Wegehaupt, Karl-Heinrich, Dr.**
**Dipl.-Chem.**
**Marktler Strasse 78**
**D-8263 Burghausen(DE)**
Erfinder: **Braunsperger, Karl**
**Unterhadermark 86**
**D-8263 Burghausen(DE)**
Erfinder: **Von Au, Günter, Dr. Dipl.-Chem.**
**Lortzingweg 9**
**D-8263 Burghausen(DE)**
Erfinder: **Stary, Fridolin, Dr. Dipl.-Chem.**
**Gluckstrasse 9**
**D-8263 Burghausen(DE)**

(54) **Verfahren zur Herstellung von in den endständigen Einheiten je eine Si-gebundene Hydroxylgruppe aufweisenden Diorganopolysiloxanen.**

(57) In den endständigen Einheiten je eine Si-gebundene Hydroxylgruppe aufweisende Diorganopolysiloxane werden dadurch hergestellt, daß cyclisches Diorganopolysiloxan und/oder Diorganodichlorsilanhydrolysat mit 0,1 bis 3 Gewichts-% Diorganodichlorsilan, bezogen auf das Gewicht der jeweils eingesetzten Menge an cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu in den endständigen Einheiten je ein Si-gebundenes Chloratom aufweisendem Diorganopolysiloxan umgesetzt wird, die Reaktionsmischung anschließend mit Wasser oder wäßriger Lösung behandelt wird, und nach Abtrennen der wäßrigen Phase von den in den endständigen Einheiten je eine Si-gebundene Hydroxylgruppe aufweisenden Diorganopolysiloxanen die niedrig siedenderen Bestandteile destillativ entfernt werden.

EP 0 319 978 A2

**Verfahren zur Herstellung von in den endständigen Einheiten je eine Si-gebundene Hydroxylgruppe aufweisenden Diorganopolysiloxanen**

Die Erfindung betrifft ein Verfahren zur Herstellung von in den endständigen Einheiten je eine Si-gebundene Hydroxylgruppe aufweisenden Diorganopolysiloxanen.

Gemäß GB-PS 1 195 761 (veröffentlicht 24. Juni 1970, Wacker-Chemie GMbH) ist es bekannt, Organohalogensiliciumverbindungen durch Umsetzung von Halogensiliciumverbindungen mit Organosiloxanen, die kein Si-gebundenes Halogen enthalten in Gegenwart von Phosphornitridchlorid herzustellen.

Es bestand die Aufgabe ein Verfahren zur Herstellung von in den endständigen Einheiten je eine Si-gebundene Hydroxylgruppe aufweisenden Diorganopolysiloxanen bereitzustellen, bei dem die Viskosität dieser Diorganopolysiloxane gezielt gesteuert werden kann. Es bestand weiterhin die Aufgabe in den endständigen Einheiten je eine Si-gebundene Hydroxylgruppe aufweisende Diorganopolysiloxane aus verhältnismäßig leicht zugänglichen Organosiliciumverbindungen, mit verhältnismäßig geringem Aufwand, in guten Ausbeuten und mit enger Molekulargewichtsverteilung herzustellen. Diese Aufgaben werden durch die Erfindung gelöst.

Gegenstand der Erfindung ist ein Verfahren zur Herstellung von in den endständigen Einheiten je eine Si-gebundene Hydroxylgruppe aufweisenden Diorganopolysiloxanen, dadurch gekennzeichnet, daß cyclisches Diorganopolysiloxan und/oder Diorganodichlorsilanhydrolysat mit 0,1 bis 3 Gewichts-% Diorganodichlorsilan, bezogen auf das Gewicht der jeweils eingesetzten Menge an cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu in den endständigen Einheiten je ein Si-gebundenes Chloratom aufweisendem Diorganopolysiloxan umgesetzt wird, die Reaktionsmischung anschließend mit Wasser oder wäßriger Lösung behandelt wird und nach Abtrennen der wäßrigen Phase von den in den endständigen Einheiten je eine Si-gebundene Hydroxylgruppe aufweisenden Diorganopolysiloxanen die niedrig siedenderen Bestandteile destillativ entfernt werden.

Gemäß GB-PS 1 195 761 wurden sehr viel größere Mengen an Halogensiliciumverbindungen als auch an Phosphornitridchlorid eingesetzt als Gemäß dem erfindungsgemäßen Verfahren. Aus GB-PS 1 195 761 war weiterhin nichts über die Herstellung von in den endständigen Einheiten je eine Si-gebundene Hydroxylgruppe aufweisenden Diorganopolysiloxanen bzw. über ein Verfahren zur Steuerung der Viskosität dieser Diorganopolysiloxane zu entnehmen und es lag auch nicht nahe.

Bei dem erfindungsgemäßen Verfahren wird als cyclisches Diorganopolysiloxan vorzugsweise solches der Formel

$$(R_2SiO)_n$$

eingesetzt, wobei R gleiche oder verschiedene, gegebenenfalls halogenierte Kohlenwasserstoffreste mit 1 bis 18 Kohlenstoffatom(en) je Rest bedeutet und n eine ganze Zahl im Wert von 3 bis 11 ist.

Es kann eine Art von cyclischem Diorganopolysiloxan eingesetzt werden. Es kann aber auch ein Gemisch aus mindestens zwei verschiedenen Arten von cyclischen Diorganopolysiloxanen eingesetzt werden, wobei die Verschiedenheit aus unterschiedlicher Ringgröße und/oder unterschiedlichen Substituenten der Siliciumatome bestehen kann.

Bei dem erfindungsgemäßen Verfahren wird als Diorganodichlorsilanhydrolysat vorzugsweise solches eingesetzt, das aus 20 bis 30 Gewichts-% cyclischem Diorganopolysiloxan der Formel

$$(R_2SiO)_n$$

und aus 70 bis 80 Gewichts-% Diorganopolysiloxan der Formel

$$HO(R_2SiO)_mSiR_2OH$$

besteht, jeweils bezogen auf das Gewicht der jeweils eingesetzten Menge an Diorganodichlorsilanhydrolysat, wobei R und n die oben dafür angegebene Bedeutung haben und m eine ganze Zahl im Wert von 20 bis 50 ist.

Bei dem erfindungsgemäßen Verfahren wird als Diorganodichlorsilan vorzugsweise solches der Formel

$$R_2SiCl_2$$

eingesetzt, wobei R die oben dafür angegebene Bedeutung hat.

Beispiele für Kohlenwasserstoffreste R sind Alkylrest, wie der Methyl- und Ethylrest sowie Butyl-, Decyl-, und Octadecylreste; Kohlenwasserstoffreste mit mindestens einer aliphatischen Mehrfachbindung, wie der Vinylrest; Arylreste, wie der Phenylrest; Alkarylreste, wie Tolylreste; und Aralkylreste, wie der Benzylrest. Beispiele für halogenierte Kohlenwasserstoffreste R sind Halogenalkylreste, wie der 3,3,3-Trifluorpropylrest, und Halogenarylreste, wie o-, p-und m-Chlorphenylreste. Schon wegen der leichteren Zugänglichkeit sind vorzugsweise mindestens 70 % der Anzahl der organischen Reste in den bei dem erfindungsgemäßen Verfahren eingesetzten Organosiliciumverbindungen Methylreste.

Durch die Menge an Diorganodichlorsilan im Bereich von 0,1 bis 3 Gewichts-%, jeweils bezogen auf das Gewicht der jeweils eingesetzten Menge an cyclischem Diorganopolysiloxan und/oder Diorganodichlorsilanhydrolysat, mit der cyclisches Diorganopolysiloxan und/oder Diorganodichlorsilanhydrolysat umgesetzt wird, läßt sich die Viskosität des Endprodukts -des in den endständigen Einheiten je eine Si-gebundene Hydroxlygruppe aufweisenden Diorganopolysiloxans - gezielt steuern.

Bei den Phosphornitridchloriden, in deren Gegenwart cyclisches Diorganopolysiloxan und/oder Diorganodichlorsilanhydrolysat mit Diorganodichlorsilan ungesetzt wird, kann es sich z. B. um solche handeln, die durch Umsetzung von 400 Gewichtsteilen Phosphorpentachlorid mit 130 Gewichtsteilen Ammoniumchlorid hergestellt wurden (vgl. z. B. "Bericht der Deutschen Chemischen Gesellschaft", 57. Jahrgang 1924, Seite 1345), oder solche sein, die durch Umsetzung von 2 Mol Phosphorpentachlorid mit 1 Mol Ammoniumchlorid erhältlich sind (vgl. z. B. US 3 839 388, ausgegeben 1. Oktober 1974, S. Nitzsche et al., Wacker-Chemie GmbH). Selbstverständlich können auch Gemische aus mindestens zwei verschiedenen Arten von Phosphornitridchloriden verwendet werden.

Phosphornitridchlorid wird in Mengen von 1 bis 50 Gewichts-ppm, besonders bevorzugt in Mengen von 20 bis 40 Gewichts-ppm, jeweils bezogen auf das Gewicht der jeweils eingesetzten Menge an Organosiliciumverbindungen, verwendet.

Die Umsetzung von cyclischem Diorganopolysiloxan und/oder Diorganodichlorsilanhydrolysat mit Diorganodichlorsilan in Gegenwart von Phosphornitridchlorid findet bei einer Temperatur von vorzugsweise 60 bis 100° C, besonders bevorzugt 70 bis 90° C, und vorzugsweise beim Druck der umgebenden Athmosphäre, also bei 1020 hPa (abs.) oder etwa 1020 hPa (abs.) statt. Falls erwünscht, können bei der Umsetzung aber auch höhere oder niedrigere Drücke angewendet werden. Die bevorzugten Reaktionszeiten liegen im Bereich von 3 bis 8 Stunden.

Nach der Umsetzung von cyclischem Diorganopolysiloxan und/oder Diorganodichlorsilanhydrolysat mit Diorganodichlorsilan in Gegenwart von Phosphornitridchlorid zu in den endständigen Einheiten je ein Si-gebundenes Chloratom aufweisendem Diorganopolysiloxan wird die Reaktionsmischung mit Wasser oder wäßriger Lösung behandelt und die wäßrige Phase anschließend von der organischen Phase abgetrennt.

Die Reaktionsmischung wird dabei mehrmals mit flüssigem Wasser zur Verminderung des Säuregehalts der Reaktionsmischung gewaschen. Während des Waschvorgangs wird dabei ebenso das Phosphornitridchlorid bzw. dessen Umsetzungsprodukte aus der Reaktionsmischung entfernt.

Anstelle von flüssigem Wasser kann auch eine alkalische wäßrige Lösung z. B. eine wässrige Lösung von NaHCO₃ ver wendet werden, um die Anzahl der Waschvorgänge auf gegebenenfalls einen zu reduzieren.

Anstelle mit flüssigem Wasser kann die Reaktionsmischung ebenso mit dampfförmigem Wasser behandelt werden, wobei durch die Reaktionsmischung dampfförmiges Wasser geleitet wird. Die Behandlung mit Wasserdampf hat dabei den Vorteil, daß die Abtrennung der wäßrigen Phase von der organischen Phase durch das Durchleiten von Wasserdampf durch die Reaktionsmischung erfolgt und dabei flüchtige Bestandteile wie z. B. nicht umgesetzte cyclische Diorganopolysiloxane gleichzeitig mitausgetrieben werden.

Die Reaktionsmischung wird solange mit flüssigem oder dampfförmigem Wasser bzw. wäßriger Lösung behandelt, bis sie vorzugsweise einen pH-Wert im Bereich von 5 bis 9, besonders bevorzugt von in etwa 7 aufweist.

Zur besseren Abtrennung der organischen Phase von der wäßrigen Phase wird der Reaktionsmischung gegebenenfalls nicht in Wasser mischbares, inertes organisches Lösungsmittel mit einer Dichte kleiner 1 g/cm³ bei 20° C zugesetzt. Beispiele für geeignete Lösungsmittel sind z. B. Benzol, Toluol oder Xylol. Die Zugabe von Lösungsmitteln erfolgt in Mengen von bis zu 100 Gewichts-%, bezogen auf das Gewicht der jeweils eingesetzten Menge an Organosiliciumverbindungen.

Nach Abtrennen der wäßrigen Phase von der organischen Phase wird das gegebenenfalls zugesetzte organische Lösungsmittel destillativ von der organischen Phase entfernt.

Von den gewünschten, in den endständigen Einheiten je eine Si-gebundene Hydroxylgruppe aufweisenden Diorganopolysiloxanen werden die niedrig siedenderen Bestandteile, bei denen es sich insbesondere um cyclische Diorganopolysiloxane handelt, destillativ abgetrennt. Die Destillation erfolgt vorzugsweise bei 140 bis 150°C und 0,5 bis 8 hPa (abs.).

Die nach dem erfindungsgemäßen Verfahren hergestellten, in den endständigen Einheiten je eine Si-gebundene Hydroxylgruppe aufweisenden Diorganopolysiloxane haben eine Viskosität von vorzugsweise 250 bis 50 000 mPa.s bei 25°C und enthalten vorzugsweise 0,038 bis 0,38 Gewichts-% Si-gebundene Hydroxylgruppen, jeweils bezogen auf das Gewicht dieser Diorganopolysiloxane.

Die nach dem erfindungsgemäßen Verfahren hergestellten, in den endständigen Einheiten je eine Si-gebundene Hydroxylgruppe aufweisenden Diorganopolysiloxane können ausgezeichnet zu höhermolekularen Diorganopolysiloxanen weiterkondensiert werden. Insbesondere wird bei der Weiterkondensation in Gegenwart von Phosphornitridchlorid wesentlich weniger Phosphornitridchlorid als bisher benötigt.

Die erfindungsgemäß hergestellten, in den endständigen Einheiten je eine Si-gebundene Hydroxylgruppe aufweisenden Diorganopolysiloxane eignen sich z. B. als Zusätze für bei Raumtemperatur oder höheren Temperaturen vernetzbare Massen auf Grundlage von Diorganopolysiloxanen.

Das in den folgenden Beispielen verwendete Phosphornitridchlorid wurde hergestellt wie folgt:

Ein Gemisch aus 417 g (2 Mol) Phosphorpentachlorid und 53,3 g (1 Mol) Ammoniumchlorid in 1000 ml Tetrachlorethan wird 12 Stunden zum Sieden unter Rückfluß erwärmt. Aus der so erhaltenen, hellgelben Lösung werden bei 160°C und unter Erniedrigung des Drucks bis auf etwa 1,33 hPs (abs.) die flüchtigen Anteile entfernt. Als Rückstand verbleiben gelbliche Kristalle, die im wesentlichen aus der Verbindung der Formel

$$Cl_3PNPCl_2NPCl_3 . PCl_6$$

bestehen.

Beispiel 1

In einem beheizbaren Glaskolben mit Ablaßhahn, Rührwerk und Destillationsaufsatz werden 200 g einer Mischung von cyclischen Dimethylpolysiloxanen mit 3 bis 11 Siloxaneinheiten je Molekül, wobei der Anteil von Octamethylcyclotetrasiloxan den Anteil der übrigen cyclischen Dimethylpolysiloxane überwiegt, mit 2 g Dimethyldichlorsilan und 0,04 ml einer 25 gewichtsprozentigen Lösung von Phosphornitridchlorid in Methylenchlorid vermischt. Das Reaktionsgemisch wird auf 80°C erhitzt und 5 Stunden bei 80°C langsam gerührt. Anschließend wird das Reaktionsgemisch mit 100 ml Toluol versetzt und die organische Phase mehrmals mit je 200 ml Wasser säurefrei gewaschen bis die organische Phase einen pH-Wert von etwa 7 aufweist. Nach Abtrennen der wäßrigen Phase wird das Toluol von der organischen Phase destillativ entfernt. Nach dem Abdestillieren der bei 140 bis 150°C bei 1 bis 3 hPa (abs.) siedenden Stoffe werden 180 g (90 % der Theorie) eines wasserklaren, in den endständigen Einheiten je eine Si-gebundene Hydroxylgruppe aufweisenden Dimethylpolysiloxan mit einer Viskosität von 2 120 mPa.s bei 25°C und einem Gehalt von Si-gebundenen Hydroxylgruppen von 0,1 Gewichts-% erhalten.

Beispiele 2 bis 4

Die im Beispiel 1 beschriebene Arbeitsweise wird wiederholt mit der Abänderung, daß anstelle der 2 g Dimethyldichlorsilan jeweils die in Tabelle 1 angegebene Menge an Dimethyldichlorsilan eingesetzt wird. Die jeweiligen Ausbeuten an in den endständigen Einheiten je eine Si-gebundene Hydroxylgruppe aufweisendem Dimethylpolysiloxan, dessen jeweilige Viskosität und dessen jeweiliger Gehalt an Si-gebundenen Hydroxylgruppen sind in der Tabelle 1 angegeben. Wie aus der Tabelle 1 zu entnehmen ist, läßt sich die Viskosität des Endprodukts durch die eingesetzte Menge an Dimethyldichlorsilan steuern.

Tabelle 1

| Beispiele | (CH$_3$)$_2$SiCl$_2$ | | Ausbeute an Dimethylpolysiloxan | | Viskosität | OH-Gehalt[1] |
|---|---|---|---|---|---|---|
| | g | Gew.-%[2] | g | % d.Th. | mPa.s (25°C) | Gew.-% |
| 1 | 2 | 1 | 180 | 90 | 2 120 | 0,1 |
| 2 | 4 | 2 | 170 | 85 | 500 | 0,19 |
| 3 | 1 | 0,5 | 176 | 88 | 7 255 | 0,06 |
| 4 | 0,5 | 0,25 | 170 | 85 | 18 000 | 0,04 |

[1] Gehalt an Si-gebundenen Hydroxlygruppen bestimmt nach Zerewitenoff
[2] bezogen auf das Gewicht an eingesetztem cyclischem Dimethylpolysiloxan

Beispiel 5 bis 9

Die Arbeitsweise in Beispiel 1 wird jeweils wiederholt mit den Abänderungen, daß anstelle der 200 g der dort verwendeten Mischung von cyclischen Dimethylpolysiloxanen 200 g Dimethyldichlorsilanhydrolysat, das zu 30 Gewichts-% aus einer Mischung von cyclischen Dimethylpolysiloxanen mit 3 bis 11 Siloxaneinheiten je Molekül und zu 70 Gewichts-% aus einer Mischung von Dimethylpolysiloxandiolen mit 20 bis 50 Siloxaneinheiten je Molekül besteht, und anstelle der 2 g Dimethyldichlorsilan jeweils die in Tabelle 2 angegebene Menge an Dimethyldichlorsilan eingesetzt werden. Die jeweiligen Ausbeuten an in den endständigen je eine Si-gebundene Hydroxylgruppe aufweisendem Dimethylpolysiloxan, dessen jeweilige Viskosität und dessen jeweiliger Gehalt an Si-gebunden Hydroxylgruppen sind in Tabelle 2 angegeben. Wie aus Tabelle 2 zu entnehmen ist, läßt sich die Viskosität des Endproduktes durch die eingesetzte Menge an Dimethyldichlorsilan steuern.

Tabelle 2

| Beispiele | (CH$_3$)$_2$SiCl$_2$ | | Ausbeute an Dimethylpolysiloxan | | Viskosität | OH-Gehalt[1] |
|---|---|---|---|---|---|---|
| | g | Gew.-%[2] | g | % d.Th. | mPa.s (25°C) | Gew.-% |
| 5 | 6 | 3 | 187 | 93,5 | 587 | 0,19 |
| 6 | 4 | 2 | 182 | 91 | 1 530 | 0,11 |
| 7 | 2 | 1 | 177 | 88,5 | 3 130 | 0,07 |
| 8 | 1,5 | 0,75 | 176 | 88 | 6 400 | 0,06 |
| 9 | 1 | 0,5 | 174 | 87 | 24 000 | 0,04 |

[1] Gehalt an Si-gebundenen Hydroxylgruppen bestimmt nach Zerewitenoff
[2] bezogen auf das Gewicht an eingesetztem Dimethyldichlorsilanhydrolysat

Beispiel 10

Die Arbeitsweise von Beispiel 1 wird wiederholt mit den Abänderungen, daß nach einer Reaktionszeit von 5 Stunden kein Toluol zu der Reaktionsmischung zugeben wird und daß anstelle des Waschens der organischen Phase mit flüssigem Wasser Wasserdampf solange durch die Reaktionsmischung durchgeleitet wird bis die Reaktionsmischung einen pH-Wert von ca. 7 aufweist. Die flüchtigen Bestandteile werden dabei gleichzeitig mitausgetrieben, denn beim anschließenden Erhitzen der Reaktionsmischung bei 150°C und 1 hPa (abs.) destilliert nichts mehr ab. Als Rückstand verbleiben 174 g (86 % der Theorie) eines wasserklaren, in den endständigen Einheiten je eine Si-gebundene Hydroxylgruppe aufweisenden Dimethylpolysiloxans mit einer Viskosität von 3 500 mPa.s bei 25 °C und einem Gehalt an Si-gebundenen Hydroxylgruppen von 0,07 Gewichts-%.

Die in den Beispielen 1 bis 10 hergestellten, in den endständigen Einheiten je eine Si-gebundene Hydroxylgruppe aufweisenden Dimethylpolysiloxane haben eine enge, gelchromatographisch bestimmte Molekulargewichtsverteilung.

Beispiel 11

Dieses Beispiel soll zeigen, daß schon bei Reaktionszeiten von 3 Stunden befriedigende Ausbeuten an Endprodukt erhalten werden. Dazu werden analog Beispiel 1 200 g der dort verwendeten Mischung von cyclischen Diorganopolysiloxanen mit 3 bis 11 Siloxaneinheiten je Molekül mit 2 g Dimethyldichlorsilan und 0,04 ml einer 25 gewichtsprozentigen Lösung von Phosphornitridchlorid in Methylenchlorid vermischt. Das Reaktionsgemisch wird auf 80 °C erhitzt und bei dieser Temperatur langsam gerührt. Während der Reaktionszeit wird jede Stunde eine 10 g Probe entnommen. In einem offenen Tiegel werden die Proben jeweils 4 Stunden lang bei 220 °C erhitzt, um die flüchtigen Bestandteile zu entfernen. Die Rückstände der Proben sind in Tabelle 3 wiedergeben.

Tabelle 3

| Reaktionszeit | Rückstand der 10 g Probe |
|---|---|
| 1 h | 4,97 g |
| 2 h | 5,80 g |
| 3 h | 7,88 g |
| 4 h | 8,35 g |
| 5 h | 8,58 g |
| 8 h | 8,78 g |

Schon nach einer Reaktionszeit von 3 Stunden erhält man eine Ausbeute von ca. 79 % der Theorie an Endprodukt.

**Ansprüche**

1. Verfahren zur Herstellung von in den endständigen Einheiten je eine Si-gebundene Hydroxylgruppe aufweisenden Diorganopolysiloxanen, dadurch gekennzeichnet, daß cyclisches Diorganopolysiloxan und/oder Diorganodichlorsilanhydrolysat mit 0,1 bis 3 Gewichts-% Diorganodichlorsilan, bezogen auf das Gewicht der jeweils eingesetzten Menge an cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu in den endständigen Einheiten je ein Si-gebundenes Chloratom aufweisendem Diorganopolysiloxan umgesetzt wird, die Reaktionsmischung anschließend mit Wasser oder wäßriger Lösung behandelt wird und nach Abtrennen der wäßrigen Phase von den in den endständigen Einheiten je eine Si-gebundene Hydroxylgruppe aufweisenden Diorganopolysiloxanen die niedrig siedenderen Bestandteile destillativ entfernt werden.

2. Verfahren nach Anspruch 1, dadurch gekennzeichnet, daß als cyclisches Diorganopolysiloxan solches der Formel

$(R_2SiO)_n$

eingesetzt wird, wobei R gleiche oder verschiedene, gegebenenfalls halogenierte Kohlenwasserstoffreste mit 1 bis 18 Kohlenstoffatomen je Rest bedeutet und n eine ganze Zahl im Wert von 3 bis 11 ist.

3. Verfahren nach Anspruch 1, dadurch gekennzeichnet, daß als Diorganodichlorsilanhydrolysat solches eingesetzt wird, daß aus 20 bis 30 Gewichts-% cyclischem Diorganopolysiloxan der Formel

$(R_2SiO)_n$

und aus 70 bis 80 Gewichts-% Diorganopolysiloxan der Formel

$$HO(R_2SiO)_mSiR_2OH,$$

jeweils bezogen auf das Gewicht der jeweils eingesetzten Menge an Diorganodichlorsilanhydrolysat, besteht, wobei R und n die im Anspruch 2 angegebene Bedeutung haben und m eine ganze Zahl im Wert von 20 bis 50 ist.

4. Verfahren nach Anspruch 1, dadurch gekennzeichnet, daß als Diorganodichlorsilan solches der Formel

$$R_2SiCl_2$$

eingesetzt wird, wobei R die im Anspruch 2 angegebene Bedeutung hat.

5. Verfahren nach Anspruch 1, 2 oder 3, dadurch gekennzeichnet, daß die in den endständigen Einheiten je eine Si-gebundene Hydroxylgruppe aufweisenden Diorganopolysiloxane von bei 140 bis 150°C bei 0,5 bis 8 hPa (abs.) siedenden Anteilen befreit werden.